# EUROPEAN PATENT APPLICATION

(11) **EP 2 614 877 A1**
(43) Date of publication of application: **17.07.2013**
(21) Application number: 12151113.3
(22) Date of filing: 13.01.2012
(51) Int. Cl.: B01D 53/62

(54) **Method and system for low emission CO2 capture**

(71) Applicant: Alstom Technology Ltd, 5400 Baden (CH)
(72) Inventor: Heinz, Gerhard, 73732 Esslingen (DE)
(74) Representative: Simonsson, Erik

(57) **Abstract**

A method for capturing carbon dioxide, CO₂, from flue gas produced by the combustion of carbon containing matter involves capturing the carbon dioxide in a carbon dioxide capturing unit (10). The carbon dioxide present in the flue gas is captured by a process of carbonation followed by release of carbon dioxide by a process of decarbonation forming a carbon dioxide rich flue gas, wherein a recirculation stream comprising a portion of the carbon dioxide released in the process of decarbonation is recirculated to be included in the process of carbonation.

## Description

### Field of the invention

The present invention relates to a method and system for CO₂ capturing in a carbon dioxide capturing unit.

### Background of the invention

Most of the energy used in the world today is derived from the combustion of carbon and hydrogen containing fuels such as coal, oil and natural gas, as well as organic fuels. Such combustion generates a flue gas containing high levels of carbon dioxide. Due to concerns about global warming, there is an increasing demand for the reduction of emissions of carbon dioxide to the athmosphere. Such is why methods have been developed to remove carbon dioxide from flue gas before being released to the atmosphere.

Carbon dioxide capturing units arranged for capturing carbon dioxide from flue gas may be used in connection with different kinds of plants, for example coal or oil fired power plants, waste incinerators, industrial and metallurgical plants, etc., operated in accordance with various process arrangements, for example in oxy-fuel combustion arrangement. One kind of carbon dioxide capturing unit comprises a system for carbon dioxide capture by an absorbing agent. The absorbing agent may be a metal oxide which forms a metal carbonate upon the absorption of carbon dioxide (CO₂). In such a system, the metal carbonate is then treated to release the captured carbon dioxide and as such, the absorbing agent is regenerated in an efficient manner. An example of an absorbing agent is calcium oxide (CaO) and a system using this agent is commonly mentioned as a regenerative calcium cycle (RCC). A method and system for such a regenerative calcium cycle (RCC) is described in US 6,737,031. More specifically, a method for capturing sulphur dioxide (SO₂) and carbon dioxide (CO₂) is described therein. For capturing of the carbon dioxide the method comprises steps wherein the carbon dioxide present in the flue gas is captured by carbonisation and is then decarbonised. The carbon dioxide released is transferred for further treatment or storage. The method described is suitable for combustion of carbon-containing matter like fossil fuels or waste.

In the system the flue gas is separated from the solids comprising calcium oxide or calcium carbonate. The flue gas may comprise parts of carbon dioxide (CO₂). The carbon dioxide (CO₂) is forwarded for subsequent use or for underground storage.

However, even if the carbon dioxide is captured from the flue gas, there is a demand for increasing the purity of the carbon dioxide product obtained by the system. Thus there is a need for methods and systems to produce a product having high purity carbon dioxide. There is also a need for a system substantially free of carbon dioxide emissions.

### Summary of the invention

According to an aspect of the present disclosure, there is provided a method for capturing carbon dioxide from flue gas produced by the combustion of carbon containing matter, wherein the carbon dioxide is captured in a carbon dioxide capturing unit comprising a method wherein the carbon dioxide present in the flue gas is captured by a process of carbonation, followed by release of carbon dioxide by a process of decarbonation forming a carbon dioxide rich flue gas, and wherein a recirculation stream comprising a portion of the carbon dioxide released in the process of decarbonation is recirculated to be included in the process of carbonation.

According to one embodiment the recirculation stream comprises an amount of carbon dioxide that corresponds to 1 to 25 %, preferably 2 to 15 %, of the total amount of carbon dioxide that is released in the process of decarbonation. Also, a method is provided wherein the heat of the recirculated carbon dioxide gas stream is recovered.

According to one embodiment the method further comprises purifying the carbon dioxide rich flue gas formed by the process of decarbonation in a gas purification unit, and withdrawing a vent gas stream comprising carbon dioxide from the gas purification unit and recirculating at least a portion of the vent gas stream, forming at least a part of the recirculation stream, to the process of carbonation. An advantage of this embodiment is that carbon dioxide comprised in the vent gas that would otherwise be vented to the atmosphere is captured in the process of carbonation. Hence, the emission of carbon dioxide to the atmosphere is further reduced, and a larger portion of the carbon dioxide of the flue gas is captured and treated for further use and/or carbon dioxide sequestration.

According to one embodiment a gas purification unit comprises a process of condensing carbon dioxide to separate carbon dioxide from at least one other gas, the method comprising withdrawing at least a portion of the vent gas stream comprising carbon dioxide and the at least one other gas from the process of condensing carbon dioxide and recirculating at least a portion of the vent gas stream, forming at least a part of the recirculation stream, to the process of carbonation. An advantage of this embodiment is that vent gas from a process of condensing carbon dioxide comprises also some gaseous carbon dioxide. By recirculating at least a portion of the vent gas at least a portion of the carbon dioxide content of the vent gases is captured, thereby reducing the amount of carbon dioxide that is released to the atmosphere.

According to one embodiment the method comprises withdrawing, upstream of a process of condensing carbon dioxide to separate carbon dioxide from at least one other gas, a stream of carbon dioxide rich flue gas generated in the process of decarbonation and including the withdrawn stream in the recirculation stream. An advantage of this embodiment is that the purity with respect to carbon dioxide of the carbon dioxide rich flue gas may be increased, since a portion of the carbon dioxide rich flue gas is recirculated to the process of carbonation in which carbon dioxide may be separated from unwanted gases, such as nitrogen and oxygen, contained in the carbon dioxide rich flue gas.

Further, the process of carbonation is performed by reaction of metal oxide and carbon dioxide forming metal carbonate; preferably the metal oxide is calcium oxide forming calcium carbonate (CaCO₃).

According to another aspect of the present disclosure, there is provided a system for capturing carbon dioxide from flue gas comprising a carbon dioxide capturing unit, wherein said carbon dioxide capturing unit includes
a first reactor comprising absorbing agent, such as metal oxide (MeO), for a carbonation reaction; a second reactor for a decarbonation reaction, producing a carbon dioxide rich flue gas; a duct forwarding a carbon dioxide enriched flue gas; and
a duct recirculating a recirculation stream comprising a portion of the carbon dioxide released in the second reactor to the first reactor for carbonation.

According to one embodiment the system further comprises a gas purification unit for purifying the carbon dioxide rich flue gas produced in the second reactor, wherein the duct recirculating a recirculation stream is arranged for recirculating a vent gas stream comprising carbon dioxide from the gas purification unit to the first reactor. An advantage of this embodiment is that carbon dioxide comprised in the vent gas may be captured, thereby reducing further the amount of carbon dioxide that is released to the atmosphere.

According to one embodiment a gas purification unit comprises a CO₂ condensation unit for condensing carbon dioxide to separate carbon dioxide from at least one other gas, wherein the duct recirculating a recirculation stream is arranged for recirculating a vent gas stream comprising carbon dioxide and the other gas from the condensation unit to the first reactor. A CO₂ condensation unit often produces a vent gas that comprises, in addition to the gases, such as oxygen, nitrogen and argon, that are to be removed in such unit, also some carbon dioxide. By recirculating at least a portion of the vent gas from the CO₂ condensation unit to the first reactor at least a portion of the carbon dioxide content of the vent gas may be captured.

In the system for capturing carbon dioxide from flue gas, the heat of said carbon dioxide rich flue gas may be separated from the first reactor, and be recovered. Heat recovering is preferably performed by heat exchange. Typically, heat recovering is performed by heat exchanging carbon dioxide rich flue gas with a water stream cycle and/or with a stream of oxygen forwarded to the second reactor for decarbonation, preferably produced in an air separation unit (ASU).

Further, in the system provided, the carbon dioxide rich flue gas is further purified downstream the second reactor.

By the recirculation of carbon dioxide rich flue gas according to the method and system described above, it is possible to improve the performance of known methods and systems. The flexibility of the method and system is high and may be adapted to changes in the quality of the streams fed to the carbonator, as well as to the calciner.

By the subject method and system, the amount of emissions of carbon dioxide from the system are reduced. Also, the capture rate of CO₂ is increased in comparison with systems without the recirculation of a recirculation stream.

Further advantages of the described method and system is its close integration to the process.

The above described features, and other features, are examplified by the following figures and detailed description.

### Brief description of the Drawing

Referring now to the drawing, which illustrates examplary embodiments, and wherein the like elements are numbered alike:

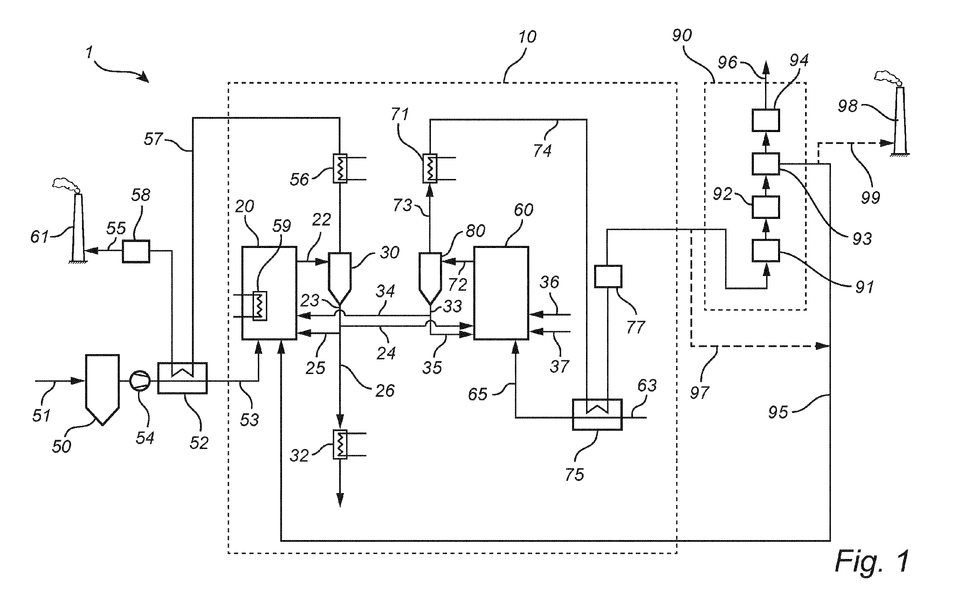

Fig. 1 schematically depicts a carbon dioxide capturing unit comprising a regenerative calcium cycle.

### Description of preferred embodiments

The reaction taking place in a first reactor 20 is a carbonation reaction wherein carbon dioxide, CO₂, is absorbed by an absorbing agent. More specifically, the carbonation reaction is the reaction between CO₂ present in the flue gas and a metal oxide (MeO), forming MeCO₃ according to the following scheme:

MeO + CO₂ → MeCO₃

The reaction is an exothermic reaction, which proceeds at a temperature depended on the metal oxide used for capturing carbon dioxide.

The kinetics of the reaction is important for an optimized process, and controlling the temperature is important for an efficient reaction.

The capturing of carbon dioxide may occur with different metal oxides (MeO) forming metal carbonates, for example limestone. The metal oxides used for the invention may be selected from calcium oxide (CaO), magnesium oxide (MgO), aluminium oxide (Al₂O₃), zinc oxide (ZnO), and calcium magnesium oxide (CaMgO) forming calcium carbonate (CaCO₃), for example in form of calcite or aragonite; magnesium carbonate (MgCO₃), for example in form of magnesite, alumina carbonate (Al₂(CO₃)₃); zinc carbonate (ZnCO₃) or in form of calcium magnesium carbonate, such as dolomite (CaMg(CO₃)₂), respectively. The list of metal oxides is not exhaustive.

An embodiment of the system of the invention is further illustrated in figure 1.

The system 1 comprises a carbon dioxide capturing unit 10 comprising a regenerative calcium cycle (RCC) including the first reactor 20 and a second reactor 60. The flue gas, which may be generated in, for example, a coal or oil fired power plant, a waste incinerator, or a metallurgical plant, from which the carbon dioxide CO₂ will be captured is forwarded via duct 51 to an optional flue gas desulphurisation unit 50 for desulphurisation of the flue gas. The flue gas is then pressurised by a fan unit 54. Optionally, the flue gas is heated by a heat exchanger 52, wherein the heat from the carbonation reactor is recovered, before the flue gas is introduced to the first reactor 20. Reactor 20 is used for capturing the carbon dioxide CO₂ by the carbonation reaction and functions, hence, as the carbonation reactor.

In this first reactor 20 a metal oxide, for example CaO (burnt lime), is used for sorption of the carbon dioxide to form metal carbonate, for example lime stone, i.e., calcium carbonate (CaCO₃). Hence, at least a portion of the content of carbon dioxide of the flue gas entering the first reactor 20 is absorbed in the first reactor 20, resulting in the formation of a carbon dioxide depleted flue gas. As said above, the carbonation reaction is an exothermal reaction. The flue gas is pressurised to a pressure of typically 50 mbar to 400 mbar, preferably a pressure of about 100 mbar, before entering the first reactor 20, and heated to a temperature of 300 °C to 650 °C for an optimised sorption.

Flue gas with a reduced content of carbon dioxide, i.e., a carbon dioxide depleted flue gas, is forwarded from the first reactor 20 via fluidly connected duct 57. The flue gas may optionally be cooled in a single step or in multiple steps, with heat recovered in unit 56, a heat exchanger, and/or in the heat exchanger 52. As previously mentioned, the heat exchanger 52 is useful for preheating of flue gas which will be introduced in the first reactor 20. Further heat exchangers (not shown) may also be provided for recovering the heat. The carbon dioxide depleted flue gas forwarded via duct 57 may be treated for removal of dust, for example in an electrostatic precipitator (ESP) unit 58 or in any other suitable dust removal device, before the carbon dioxide depleted flue gas is transferred for further processing and/or release to the atmosphere via fluidly connected duct 55.

Optionally, heat may, as described hereinbefore, be recovered in a unit 59, a heat exchanger, also from the inside of the first reactor 20.

In the first reactor 20, carbon dioxide is captured by reaction with metal oxide, such as calcium oxide (burnt lime), forming metal carbonate MeCO₃, such as calcium carbonate (CaCO₃).

The reaction taking place in the first reactor 20 is:

MeO + CO2 → MeCO₃

The first reactor 20 may also be denoted 'the carbonator' and the reaction 'carbonation'. The carbonation reaction, the reaction between the CO₂ in the flue gas and calcium oxide, CaO, proceeds at a temperature of, typically, between about 600 °C to 700 °C, preferably about 650 °C. The carbonation is an exothermic reaction, thus heat is generated and shall be removed for optimizing the yield, thus to optimize the percentage of the carbon dioxide of the flue gas that is captured by the metal oxide.

From the first reactor 20, the solid material being rich in metal carbonate, for example, calcium carbonate CaCO₃, but also containing a certain amount of unreacted metal oxide, is forwarded to the second reactor 60 placed downstream of the first reactor 20. A stream comprising a mixture of carbon dioxide depleted flue gas and solids is transported from first reactor 20 via fluidly connected pipe 22.

The solids of the stream forwarded from the first reactor 20 via pipe 22 is extracted by separation in a cyclone 30. The solid stream comprises the metal carbonate as the main ingredient, but also unreacted metal oxide may be present in the solid material.

The stream of solid material separated from the carbon dioxide depleted flue gas is transported from the cyclone 30 via duct 23. The stream of solid material transported in duct 23 may be split into several streams depending on the selected arrangement. A portion of the solid material stream of duct 23 is forwarded, via duct 24, to the second reactor 60. A further portion of the solid material stream of duct 23 is, via duct 25, recirculated to the first reactor 20. Further, another portion of the solid material stream of duct 23 is forwarded via duct 26 for further processing. The solid stream comprises a mixture of metal oxide, for example calcium oxide CaO, and metal carbonate, such as calcium carbonate CaCO₃. Optionally, the heat of the solid material in duct 26 is recovered by heat exchanging, shown by heat exchanger 32.

The amount of solid material circulated is larger than the flue gas mass flow entering the carbonator, typically 1.5 to 4 times higher.

The carbon dioxide depleted flue gas separated in the cyclone 30 is forwarded via duct 57 as described above. After optional recovery of heat, in heat exchanger 52, and/or cleaning, for example in electrostatic precipitator 58, the carbon dioxide depleted flue gas may be forwarded, via ducts 57 and 55, to a stack 61 via which the carbon dioxide depleted flue gas is released to the atmosphere.

In the second reactor 60 the metal carbonate, MeCO₃, for example calcium carbonate CaCO₃, is decomposed into metal oxide, for example CaO (burnt lime) and carbon dioxide, CO₂, upon heating of the calcium carbonate CaCO₃. The reaction taking place in the second reactor 60 is:

MeCO₃ → MeO + CO₂

Thus, the process of the second reactor 60 is a decarbonation of MeCO₃ forming MeO and CO₂ when reacting with oxygen at high temperature. The second reactor 60 is also called 'the calciner' and the process taking place therein 'calcination'. The reaction is endothermic and is performed at a temperature of 800 °C to 1100 °C, typically at a temperature of about 900°C to 950 °C. Hence, the decarbonation, or 'calcination', occuring in the second reactor 60 generates a metal oxide, MeO, in solid form, and a gas being rich in carbon dioxide, CO₂, such gas being referred to as "carbon dioxide rich flue gas" hereinafter.

When the metal carbonate is calcium carbonate, the solid material forwarded from the first reactor 20, the 'carbonator', comprises calcium carbonate, CaCO₃, as a main part, but also some calcium oxide, CaO, and carbon dioxide, CO₂, is forwarded to the second reactor 60 via pipe 24.

A stream of oxygen, or air is forwarded via ducts 63 and 65 to the second reactor, the calciner 60.

The second reactor 60 may also be fed with a second portion of calcium carbonate, CaCO₃, via pipe 36, as well as fuel, like coal, via pipe 37.

After reaction in the second reactor 60, 'the calciner', the solid comprising mainly the calcium oxide, CaO, produced by the decomposition of the calcium carbonate, CaCO₃, is transferred from the second reactor 60 via pipe 72 to a separating unit 80, for example a cyclone, for separating the solids from the carbon dioxide rich flue gas generated as an effect of the decarbonation reaction. The carbon dioxide rich flue gas stream is forwarded from the cyclone 80 via duct 73, the heat of the stream may be recovered by heat exchanging in unit 71, a heat exchanger. The gas stream is forwarded further via duct 74. Optionally, the heat of the carbon dioxide rich flue gas stream may also be recovered to heat an oxygen enriched stream from an air separation unit (ASU) 75. The dust particles present in the stream of carbon dioxide rich flue gas forwarded via duct 74 may be removed by, for example, an electrostatic precipitator 77, or another suitable dust removal device.

In the air separation unit (ASU) 75 the oxygen is separated from air, which is a way to increase the energy efficiency of the oxy-fuel combustion burner connected to the second reactor 60, the calciner, and to reduce the amount of unwanted gases, such as nitrogen, **N₂,** mixed into the carbon dioxide rich flue gas. After treatment of the air in the air separation unit 75, the oxygen gas stream forwarded via duct 65 to the second reactor 60 may have a high purity of, for example, at least 90 mol-% oxygen.

The carbon dioxide rich flue gas stream of duct 74 is then forwarded further to a gas purification unit (GPU) 90. The GPU 90 comprises various units that are intended for purifying the carbon dioxide rich flue gas stream of duct 74 to obtain a pure carbon dioxide end product that may sent away for CO₂ sequestration and/or may be used in a technical process using carbon dioxide. In one example the GPU 90 may comprise a low pressure compression unit 91, a gas dryer 92, a CO₂ condensation unit 93, and a high pressure compression unit 94. In the low pressure compression unit 91 the carbon dioxide rich flue gas stream is compressed to a pressure of, for example, 15-60 bar absolute pressure. In the gas dryer 92, which may, for example, include molecular sieve material, most of a remaining portion of water vapour is removed from the carbon dioxide rich flue gas stream. In the CO₂ condensation unit 93 the carbon dioxide rich flue gas stream is cooled to low temperature, such as 0°C to minus 55°C, for example by a cryogenic process, to cause a condensation of CO₂. The CO₂ may be condensed to a liquid state. Other gas components, such as oxygen, O₂, nitrogen, **N₂,** and argon, Ar, are not condensed at the temperatures of the CO₂ condensation unit 93. A stream of these gas components, that are sometimes referred to as non-condensable gases, are removed from the CO₂ condensation unit 93 via a duct 95. The stream of non-condensable gases removed via duct 95 comprises also some carbon dioxide, CO₂, since the carbon dioxide of the carbon dioxide rich flue gas stream is not completely condensed in the CO₂ condensation unit 93. The stream of gases removed via duct 95 could be referred to as "vent gas stream" and comprises at least one of nitrogen gas, oxygen gas, and argon gas, and also some carbon dioxide gas.

The condensed carbon dioxide generated in the CO₂ condensation unit 93 has high purity and is, optionally after being evaporated, forwarded from the CO₂ condensation unit 93 to the high pressure compression unit 94. In the high pressure compression unit 94 the carbon dioxide is compressed to a pressure of, for example, 100 to 150 bar absolute pressure. Compressed carbon dioxide leaves the high pressure compression unit 94 via a duct 96 via which the compressed carbon dioxide may be forwarded for sequestration, use in a technical process, or other treatment or use.

It will be appreciated that the gas purification unit (GPU) 90 may be of another type than that described hereinabove, and may comprise other units than those units 91, 92, 93, 94 described hereinbefore. Furthermore, one or several of the units 91, 92, 93, 94 may be omitted from the gas purification unit (GPU) 90, and/or arranged in other manners than described in Fig. 1. Still further, a vent gas stream could be removed from other locations of the gas purification unit (GPU) 90, as alternative to, or in combination with, being removed from the CO₂ condensation unit 93 via duct 95.

In accordance with one embodiment the entire vent gas stream leaving CO₂ condensation unit 93 is recirculated, via duct 95, as a recirculation stream to first reactor 20. In accordance with an alternative embodiment a portion of the vent gas stream is forwarded to another device, such as a stack 98, via a duct 99.

According to one embodiment, a recirculation stream of carbon dioxide rich flue gas stream of duct 74 is recirculated, without passing through gas purification unit (GPU) 90, via a duct 97 to duct 95 and further to the first reactor 20, 'the carbonator'. Such recirculation of a portion of the carbon dioxide rich flue gas stream via duct 97, which may be made in combination with recirculation of a vent gas stream from, for example, CO₂ condensation unit 93 or as alternative thereto, may further reduce the amount of non-condensable gases of the carbon dioxide rich flue gas stream, since a portion of the non-condensable gases may be dissipated via ducts 57, 55 and stack 61, as the portion of the carbon dioxide rich flue gas stream recirculated via duct 97 is processed in first reactor 20, 'the carbonator'.

Hence, a vent gas stream from CO₂ condensation unit 93 and/or a portion of the carbon dioxide rich flue gas stream is forwarded, recirculated, via duct 95, to the first reactor 20, 'the carbonator', as a recirculated stream and is combined with the flue gas forwarded via duct 53. The carbon dioxide, CO₂, content of the recirculated stream forwarded via duct 95 is included in the reaction taking place in the first reactor 20. The amount of carbon dioxide that is recirculated via duct 95 to the first reactor 20, 'the carbonator' may for example correspond to about 1 to 25 %, more often 2 to 15 %, of the total amount of carbon dioxide that is separated in the second reactor 60. Hence, for each kg of carbon dioxide leaving second reactor 60 and being forwarded via duct 74, 10 to 250 grams of carbon dioxide is typically recirculated, via duct 95 and/or 97, as a recirculation stream to the first reactor 20, 'the carbonator'. In the first reactor 20, the 'carbonator', at least a portion of the carbon dioxide recirculated via duct 95 is captured .

The carbon dioxide rich flue gas forwarded via duct 95 comprises heat that is recovered by the recirculation to the first reactor 20. Furthermore, carbon dioxide comprised in the vent gas stream leaving CO₂ condensation unit 93 via duct 95 may be captured in the first reactor 20, 'the carbonator'. This substantially reduces the total amount of carbon dioxide that is vented to the atmosphere from the system 1 via stack 61 and/or stack 98.

The stream of recirculated carbon dioxide may typically have a pressure of about 1 bar to 1.4 bar when entering the first reactor 20, 'the carbonator'.

The recirculation of a portion of the carbon dioxide rich flue gas to the first reactor 20 via duct 97 increases the purity with respect to carbon dioxide of the gas forwarded to gas purification unit (GPU) 90 via duct 74.

From separating unit 80, the solid stream comprising mainly the metal oxide MeO, such as CaO, produced by the decomposition of the metal carbonate MeCO₃, such as calcium carbonate CaCO₃, is transferred via duct 33. The stream may be divided into several streams, with duct 34 forwarding one portion of the solid material back to the first reactor 20, and duct 35 forwarding another portion of the solid material back to second reactor 60.

To summarize, a method for capturing carbon dioxide, CO₂, from flue gas produced by the combustion of carbon containing matter involves capturing the carbon dioxide in a carbon dioxide capturing unit 10. The carbon dioxide present in the flue gas is captured by a process of carbonation followed by release of carbon dioxide by a process of decarbonation forming a carbon dioxide rich flue gas, wherein a recirculation stream comprising a portion of the carbon dioxide released in the process of decarbonation is recirculated to be included in the process of carbonation.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will be include all embodiments falling within the scope of the appended claims.

## Claims

1. A method for capturing carbon dioxide (CO₂) from flue gas produced by the combustion of carbon containing matter, wherein the carbon dioxide is captured in a carbon dioxide capturing unit (10) comprising a method wherein the carbon dioxide present in the flue gas is captured by a process of carbonation followed by release of carbon dioxide by a process of decarbonation forming a carbon dioxide rich flue gas, and
wherein a recirculation stream comprising a portion of the carbon dioxide released in the process of decarbonation is recirculated to be included in the process of carbonation.

2. A method according to claim 1, wherein the recirculation stream comprises an amount of carbon dioxide that corresponds to 1 to 25 % of the total amount of carbon dioxide that is released in the process of decarbonation.

3. A method according to any one of the preceding claims, further comprising purifying the carbon dioxide rich flue gas formed by the process of decarbonation in a gas purification unit (90), and withdrawing a vent gas stream comprising carbon dioxide from the gas purification unit (90) and recirculating at least a portion of the vent gas stream, forming at least a part of the recirculation stream, to the process of carbonation.

4. A method according to claim 3, wherein the gas purification unit (90) comprises a process of condensing carbon dioxide to separate carbon dioxide from at least one other gas, the method comprising withdrawing at least a portion of the vent gas stream comprising carbon dioxide and the at least one other gas from the process of condensing carbon dioxide and recirculating at least a portion of the vent gas stream, forming at least a part of the recirculation stream, to the process of carbonation.

5. A method according to any one of the preceding claims, further comprising withdrawing, upstream of a process of condensing carbon dioxide to separate carbon dioxide from at least one other gas, a stream of carbon dioxide rich flue gas generated in the process of decarbonation and including the withdrawn stream in the recirculation stream.

6. A method according to any one of the preceding claims, wherein the heat of the carbon dioxide rich gas stream (74) is at least partly recovered.

7. A method according to claim 6, wherein at least a portion of the heat recovered from the carbon dioxide rich gas stream is utilized in an air separation unit (75) producing an oxygen enriched stream.

8. A method according to any one of the preceding claims, wherein the process of carbonation is performed by reaction of metal oxide and carbon dioxide forming metal carbonate; preferably the metal oxide is calcium oxide forming calcium carbonate.

9. A system for capturing carbon dioxide from flue gas comprising:
a carbon dioxide capturing unit (10), wherein said carbon dioxide capturing unit (10) includes:
a first reactor (20) comprising absorbing agent, such as metal oxide (MeO), for a carbonation reaction;
a second reactor (60) for a decarbonation reaction, producing a carbon dioxide rich flue gas;
a duct (74) forwarding a carbon dioxide rich flue gas; and
a duct (95) recirculating a recirculation stream comprising a portion of the carbon dioxide released in the second reactor (60) to the first reactor (20) for carbonation.

10. A system according to claim 9, further comprising a gas purification unit (90) for purifying the carbon dioxide rich flue gas produced in the second reactor (60), wherein the duct (95) recirculating a recirculation stream is arranged for recirculating a vent gas stream comprising carbon dioxide from the gas purification unit (90) to the first reactor (20).

11. A system according to claim 10, wherein the gas purification unit (90) comprises a CO₂ condensation unit (93) for condensing carbon dioxide to separate carbon dioxide from at least one other gas, wherein the duct (95) recirculating a recirculation stream is arranged for recirculating a vent gas stream comprising carbon dioxide and the other gas from the CO₂ condensation unit (93) to the first reactor (20).

12. A system according to any one of claims 9-11, wherein the heat of said carbon dioxide rich flue gas separated from the second reactor (60) is at least partly recovered; preferably the heat recovery is performed by heat exchanging.

13. A system according to claim 12, further comprising an air separation unit (75) for generating an oxygen enriched stream, the air separation unit (75) being arranged for recovering at least a portion of the heat of the carbon dioxide rich flue gas

14. A system according to any one of claims 9-13, wherein the carbon dioxide rich flue gas is further purified downstream the second reactor (60).

15. A system according to claim 14, wherein the carbon dioxide rich flue gas is further purified in an electrostatic precipitator unit (77).
